# EUROPEAN PATENT SPECIFICATION

(11) **EP 2 783 031 B1**
(45) Date of publication and mention of the grant of the patent: **29.07.2015**
(21) Application number: 12806153.8
(22) Date of filing: 13.11.2012
(51) Int. Cl.: B60C 9/10, D02G 3/48, D02G 3/16

(54) **A TIRE CORD FABRIC WITH TABBY**
REIFENKORDGEWEBE MIT GEWEBEBINDUNG
TISSU DE CÂBLE POUR PNEU À TABIS

(30) Priority: 22.11.2011 TR 201111537
(43) Date of publication of application: 01.10.2014
(73) Proprietor: Kordsa Global Endustriyel Iplik ve Kord Bezi Sanayi ve Ticaret Anonim Sirketi, 41310 Kocaeli (TR)
(72) Inventor: CEVAHIR, Nurcin, 41310 Kocaeli (TR)
(74) Representative: Dericioglu Kurt, Ekin
(86) International application number: PCT/IB2012/056386
(87) International publication number: WO 2013/076617

(56) References cited:
- EP-A2- 0 077 288
- EP-A2- 1 985 595
- EP-A2- 2 037 022
- WO-A1-91/12361
- WO-A1-2010/032082

## Description

### Field of the Invention

The present invention relates to a tire cord fabric with tabbies located at both ends of tire cord fabric roll which is used as reinforcement material in tire technology, The tire cord fabric rolls are tied together by splicing them at the tabby sections, and the mechanical and thermal properties of the tabby section is improved with basalt hybrid weft yarn.

### Background of the Invention

Tire cord fabric used as reinforcing material in tire comprises thousands of parallel warps in longitudinal direction and a plurality of weft yarns loosely woven vertically to the warp yarns. The weft yarn in tire cord fabric are generally not load bearing elements, they are the yarns which only hold the warp yarns together. The weft yarns are woven in certain density vertical to the warp yarns along the tire cord fabric.

***Tabby*** is woven at the end of the tire cord fabric which is much more dense compared to tire cord fabric, and it is used to fasten the warps together when the fabric roll is cut and removed from the weaving loom. Tabby section is used for splicing the fabric rolls to each other to provide production continuity during dipping process of tire cord fabric. The length of the tire cord fabric is about 1000m, whereas the length of the tabby section varies between 30 and 60 cm.

Weft density in tire cord fabric is about 5-10 weft in decimeter, whereas the weft density of tabby section is between 30-60 weft in decimeter. High weft density at the tabby section is required to enable to make the tabby durable under high temperature and high tension applied to the cord fabric during dipping. The tabby section of the tire cord fabric is not used as reinforcing material in the tire, it is separated from the cord fabric after a certain point of the operation.

Polyester, nylon, rayon, aramide and the like and the hybrid fibers comprised of mixtures thereof with high strength are used as warp yarn in the cord fabric. Materials such as staple fiber, cotton, polyester, rayon are generally used as weft yarn in the cord fabric. And cotton was the most commonly used weft yarn in the tabby area in the past. With the improvements in the technology, today fibers and hybrid fibers known as core-sheath fibers are used. Nylon-cotton fibers with high elongation are the most common example for core-sheath fibers.

The width of the tabby section is a little narrower compared to the cord fabric width due to the high weft density. High temperature and high tension applied to the tire cord fabric during dipping process cause narrowing the tabby section because of the thermal shrinkage of the cotton fiber used in the tabby section, and this causes non-uniform warp distribution, weft breakage followed by fabric splitting along the fabric and folding of fabrics. All these defects cause high amount of tire cord fabric scrap in region adjacent to the narrowed tabby section during both dipping and calendering processes.

In the European Patent document no EP0077288, one of the applications known in the state of the art, core-sheath fibers with low shrinkage are used as weft yarns in tabby area of the cord fabric.

United States Patent document no US5342678, an application known in the state of the art, discloses usage of composite yarns comprised of "cotton-polyester-acrylic" wherein core of glass filaments are used as sheath.

United States Patent document no US2009/00711587A1 discloses another operation for use of weft yarn with low shrinkage in the tabby area. Other studies about using weft yarns in tabby area are disclosed in Patent documents no. US20090071587 and WO2010032082.

The mixtures of cotton and glass fibers with low shrinkage are commonly used as weft yarn in tabby section. The glass-cotton hybrid cords are wetted with the water based adhesive solution during dipping process and the wet cotton causes narrowing in the tabby section because of the shrinking feature. The more the amount of the glass filament in the glass-cotton hybrid cord structure increases, the less the shrinkage in the fabric width becomes; the more the amount of the cotton increases, the more the shrinkage in the fabric width becomes.

Narrowing in width of the tabby section of the tire cord fabric causes various quality problems in the fabric, and the tire cord fabric waste amount increases in parts adjacent to the tabby section because of the said problems and the quality problems occurring affect the final product.

### Summary of the Invention

The objective of the present invention is to provide a tire cord fabric with tabby area having improved properties in terms of thermal endurance and mechanical features compared to basaltic fibers used instead of glass-cotton hybrid fibers.

### Detailed Description of the Invention

"A tire cord fabric with tabby section" developed to fulfill the objective of the present invention is illustrated in the accompanying figure wherein,

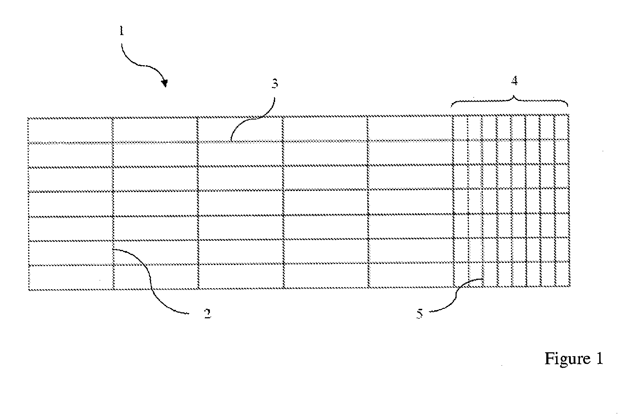

Figure 1 is the schematic view of a tire cord fabric with tabby area.

The components given in the figures are numbered and the numbers refer to the following:
1. A tire cord fabric with tabby section
2. Weft yarns
3. Warp yarns
4. Tabby section
5. Basalt-cotton hybrid weft yarns

The inventive tire cord fabric (1) is comprised of weft yarns (2) and warp yarns (3), which constitute the basic structure of it, and a tabby section (4) which is located on the joint with another cord fabric and wherein the basalt-cotton hybrid weft yarns (5) are used. The basalt fiber used in waft yarns (5) which are used in the tabby section (4) is environment friendly compared to the glass fiber. Furthermore, thermal endurance and mechanical features of the basalt fiber are higher than the glass fiber.

Basalt-cotton hybrid weft yarns (5) used in the inventive tire cord fabric (1) enable the tabby area to be more enduring and lighter. Basalt-cotton hybrid weft yarns (5) minimize the shrinkage problem occurring during the dipping process and decrease the amount of waste by eliminating various quality problems.

In the state of the art, the rate of the glass-cotton mixture is between 0.6-0.8, the basalt-cotton rate used in the inventive tire cord fabric (1) is 1.0-1.3; and thus mechanical features of the tabby section becomes more visible by means of the basalt used more than the cotton.

## Claims

1. A cord fabric (1) **comprising** weft yarns (2) and warp yarns (3), which constitute the basic structure of it, and **characterized by** tabby section (4) which is located on the joint with another tire cord fabric and wherein the basalt-cotton hybrid weft yarns (5) are used.

2. A tire cord fabric (1) according to claim 1, **characterized by** tabby section (4) which comprised of basalt cotton hybrid weft yarns (5) the basalt:cotton rate of which varies between 1.0 and 1.3 with the purpose of increasing the mechanical and thermal features.

## Patentansprüche

1. Ein Kordgewebe (1) **umfassend** Schussfäden (2) und Kettenfäden (3), welche die Grundstruktur von ihm bilden und **gekennzeichnet durch** den gefleckten Teil (4), der an der Verbindungstelle mit dem anderen Reifen-Kordgewebe angeordnet ist und worin Basalt-Baumwollen-Hybrid-Schussfäden (5) verwendet werden.

2. Ein Kordgewebe (1) gemäß Anspruch 1, **gekennzeichnet durch** den gefleckten Teil (4), welcher aus Basalt-Baumwollen-Hybrid Schussfäden gebildet ist, dessen Basalt:Baumwolle Verhältnis sich zwischen 1.0 und 1.3 ändert und zwar mit dem Zweck die mechanischen und thermischen Eigenschaften zu erhöhen.

## Revendications

1. Un tissu de corde (1) **comportant** les fils de trame (2) et les fils de chaîne (3) constituant sa structure principale et **caractérisé par** une section tigrée (4) située sur le raccord avec l'autre tissu de corde pour pneus et dans laquelle sont utilisés les fils de trame hybrides en basalte-coton (5).

2. Un tissu de corde (1) pour pneus selon la revendication 1, **caractérisé par** une section tigrée (4) consistant en fils de trame hybrides en basalte-coton (5) dont le taux de basalte:coton varie entre 1,0 et 1,3 afin d'augmenter les caractéristiques mécaniques et thermiques.
